# EUROPÄISCHE PATENTSCHRIFT

(11) **EP 1 592 501 B1**
(45) Veröffentlichungstag und Bekanntmachung des Hinweises auf die Patenterteilung: **30.05.2012**
(21) Anmeldenummer: 04707900.9
(22) Anmeldetag: 04.02.2004
(51) Int. Cl.: B01J 2/20, B29B 9/00

(54) **VORRICHTUNG ZUR HERSTELLUNG VON GRANULAT**
DEVICE FOR THE PRODUCTION OF A GRANULATE
DISPOSITIF DE PRODUCTION DE GRANULES

(30) Priorität: 11.02.2003 DE 10306688
(43) Veröffentlichungstag der Anmeldung: 09.11.2005
(73) Patentinhaber: Santrade Ltd., CH-6005 Luzern (CH)
(72) Erfinder: GIERKE, Stephan, 28357 Bremen (DE); ROTH, Bernhard, 71336 Waiblingen (DE); NOCELLA, Roger, 71394 Kernen-Rommelshausen (DE); HÄFELE, Dietmar, 73650 Winterbach (DE)
(74) Vertreter: Patentanwälte Ruff, Wilhelm, Beier, Dauster & Partner
(86) Internationale Anmeldenummer: PCT/EP2004/000983
(87) Internationale Veröffentlichungsnummer: WO 2004/071648

(56) Entgegenhaltungen:
- DE-A- 3 421 625
- US-A- 4 279 579
- US-A- 5 382 145

## Beschreibung

Die Erfindung betrifft eine Vorrichtung zur Herstellung von Granulat mit einer gelochten rotierenden Trommel mit einer Zuführeinrichtung für fließfähige Massen im Innenraum, deren Austrittsöffnungen am unteren Umfang der Trommel zur Deckung mit deren Lochungen kommen, sowie mit einem unterhalb der rotierenden Trommel angeordneten Kühlband, auf welches die aus der Trommel in Tropfenform austretenden Massen fallen und sich verfestigen, wobei die Trommel an Tragarmen gehalten ist, die um eine parallel zur Achse der Trommel verlaufende Achse schwenkbar sind.

Eine Vorrichtung zur Herstellung von Granulat ist aus der DE 28 53 054 C3 bekannt. Diese auf dem Markt unter der Bezeichnung Rotoformer bekannten Vorrichtungen haben sich für die Verarbeitung der verschiedenartigsten Schmelzen zu Granulat bewährt. Die rotierende Trommel ist dabei mit Hilfe eines Traggestelles beidseitig oberhalb des Kühlbandes gelagert. Zu Wartungszwecken oder auch dann, wenn das rotierende Außenrohr durch ein anderes mit anderer Lochteilung und anderen Lochdurchmessern ersetzt werden soll, ist ein verhältnismäßig großer Aufwand für die Demontage notwendig, weil eines der Lager axial abgezogen werden muss, ehe die Trommel gelöst werden kann. Dazu kommt, dass beim Betrieb solcher Rotoformer mitunter ein Sicherheitsrisiko auftreten kann, weil der fest über dem Kühlband angeordnete Rotoformer zusammen mit dem Kühlband einen Einzugsspalt bildet, der zur Beschädigung der Einrichtung, unter Umständen auch zu Verletzungen von Bedienungspersonen, führen kann.

Aus der deutschen Offenlegungsschrift DE 34 21 625 A1 ist eine Vorrichtung zum Herstellen von Granulat mit einer gelochten rotierenden Trommel mit einer Zuführeinrichtung für fließfähige Massen im Innenraum, deren Austrittsöffnungen am unteren Umfang der Trommel zur Deckung mit deren Lochungen kommen, sowie mit einem unterhalb der rotierenden Trommel angeordneten Kühlband bekannt, auf welches die aus der Trommel in Tropfenform austretenden Massen fallen und sich verfestigen. Die Trommel ist an Tragarmen gehalten, die um eine parallel zur Achse der Trommel verlaufende Achse schwenkbar sind. Eine Position der Tragarme kann mit einer Stellschraube eingestellt werden.

Der vorliegenden Erfindung liegt daher die Aufgabe zugrunde, eine Vorrichtung der eingangs genannten Art so auszubilden, dass zum einen eine einfache Montage und Demontage der rotierenden Trommel möglich ist und dass zum anderen eine sichere Arbeitsweise ermöglicht wird.

Zur Lösung dieser Aufgabe wird bei einer Vorrichtung der eingangs genannten Art vorgesehen, dass einer der Tragarme einen um eine senkrecht zur Schwenkachse und in deren Nähe verlaufende Achse schwenkbaren Teil besitzt und dass der schwenkbare Teil des Schwenkarmes mit einer an einer Stirnseite der Trommel angreifenden Lagerung versehen ist.

Indem die Trommel an schwenkbaren Tragarmen gehalten ist, kann die Trommel in einfacher Weise hoch- und vom Kühlband weggeschwenkt werden, wenn Wartungsarbeiten oder dergleichen durchgeführt werden sollen. Zum anderen wird es auf diese Weise aber auch möglich, den Abstand der rotierenden Trommel zum Kühlband einfach einzustellen und, wenn in Weiterbildung der Erfindung die Trommel durch einen an einem Traggestell angeordneten Anschlag positioniert wird, gegen den die Tragarme gedrückt sind, auch die Möglichkeit zu geben, dass die rotierende Trommel selbsttätig nach oben geschwenkt wird, wenn Gegenstände in den Einzugsspalt hereingezogen werden.

Zur Verbesserung der Arbeitsvorgänge bei der Wartung oder beim Auswechseln von rotierenden Trommeln ist einer der Tragarme um eine senkrecht zur Schwenkachse und in deren Nähe verlaufende Achse schwenkbar. Dieser schwenkbare Tragarm kann dann mit einer an einer Stirnseite der Trommel angreifenden Lagerung versehen werden, so dass für die Demontage oder für die Montage in einfacher Weise die Zugänglichkeit der Trommel zum Zwecks des Abziehens durch einfaches Abschwenken eines Tragarmteiles erreicht wird.

In Ausgestaltung dieser Idee kann die Lagerung drehbar um einen Verbindungszapfen angeordnet sein, der am Schwenkarm und an der Zuführeinrichtung befestigbar ist. Die Lagerung kann dabei ein stirnseitig in die Trommel einschiebbares Lagerschild aufweisen, welches axial aus der Trommel herausziehbar ist und zwar mit Hilfe des Verbindungszapfens, der ebenfalls axial von der Zuführeinrichtung abziehbar ausgebildet sein kann. Wird in Ausgestaltung der Erfindung der Verbindungszapfen mit einem Anschlag versehen, der beim axialen Abziehen von der Zuführeinrichtung das Lagerschild axial mitnimmt, dann wird in einfacher Weise der nachfolgende Abschwenkvorgang des Schwenkarmteiles möglich. Das Lagerschild selbst kann dabei in zweckmäßiger Ausgestaltung über eine Axialhülse in Drehlagern gehalten sein, die am Tragarm befestigt sind, und es kann die Axialhülse mit einem mit dem Anschlag des Verbindungszapfens zusammenwirkenden Kragen versehen kann. Wie später noch erläutert werden wird, lässt sich auf diese Weise sehr einfach zunächst das Lager aus der Trommel lösen, so dass dann der Abschwenkvorgang des Lagers möglich wird und in einfacher Weise die Trommel abgezogen werden kann. Die Montage erfolgt in umgekehrter Reihenfolge.

Die neue Ausgestaltung erlaubt daher zum einen eine bessere Zugänglichkeit zu Wartungsarbeiten, erhöht die Sicherheit der Einrichtung beim Betrieb und lässt eine einfache Einjustierung des Abstandes der rotierenden Trommel vom Kühlband zu.

In Weiterbildung der Erfindung kann zu diesem Zweck der Anschlag verstellbar ausgebildet sein.
In Weiterbildung der Erfindung können die Tragarme Teil einer Wippe sein, deren über die Schwenkachse hinausragenden Arme untereinander durch einen Querbügel verbunden sind. Es ergibt sich dadurch zum einen eine stabile Schwenkanordnung, zum anderen kann der Antriebsmotor für die Trommel, der in der Regel über einen Kettentrieb mit einem Antriebsrad der Trommel verbunden ist, am Querbügel angeordnet sein, so dass ein gewisser Gewichtsausgleich an der Wippe erreicht wird, der dafür sorgt, das die Wippe mit der daran angeordneten rotierenden Trommel ohne große Kraftaufwendung verschwenkt werden kann.

Die Erfindung ist anhand eines Ausführungsbeispieles in der Zeichnung dargestellt und wird im folgenden erläutert. Es zeigen:
- Fig. 1: eine erfindungsgemäße Vorrichtung mit einer rotierenden gelochten Trommel,
- Fig. 2: die vergrößerte Darstellung eines Details der Fig. 1,
- Fig. 3: die Darstellung eines Teilschnittes längs der Ebene III-III in Fig. 2,
- Fig. 4: eine Darstellung ähnlich Fig. 2, jedoch bei teilweise abgeklappter Lagerung für die rotierende Trommel,
- Fig. 5: eine Darstellung ähnlich Fig. 4, jedoch mit vollständig abgeklappter Lagerung und
- Fig. 6: die Darstellung ähnlich Fig. 5, jedoch bei abgezogener Trommel.

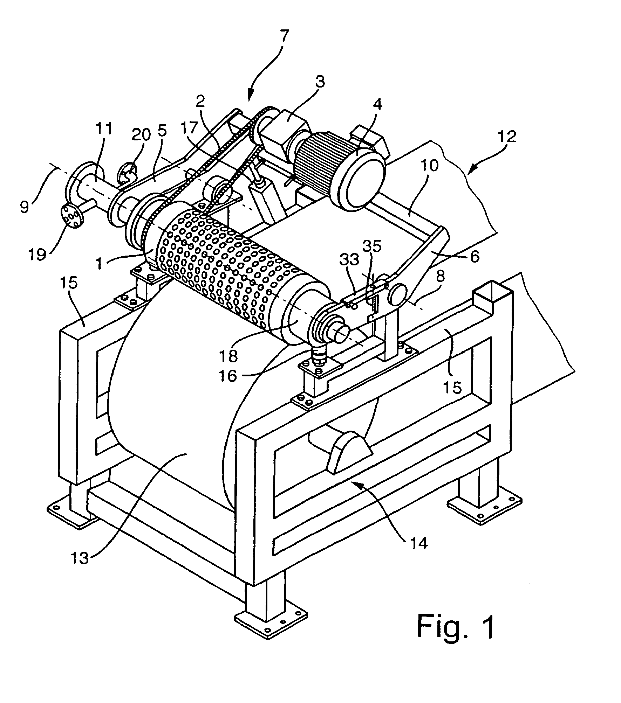

Die Fig. 1 zeigt eine Granuliervorrichtung, die mit einer rotierenden gelochten Trommel 1 ausgerüstet ist, welche wiederum über einen Kettentrieb 2 von einem mit einem Getriebe 3 ausgerüsteten Elektromotor 4 angetrieben ist. Die rotierende Trommel 1 ist dabei an Schwenkarmen 5, 6 gelagert, die Teil einer Wippe 7 sind, welche um die Achse 8 schwenkbar ist, die wiederum parallel zu der Drehachse 9 der Trommel 1 verläuft. Der Antriebsmotor 4 sitzt dabei an einem Verbindungsbügel 10 der Wippe 7, welcher auf der, von der rotierenden Trommel 1 aus gesehen, entgegengesetzten Seite der Schwenkachse 8 liegt. Es wird ohne weiteres erkennbar, dass das Gewicht des Antriebsmotors 4 und des Getriebes bei dieser Art der Anordnung ein Gegengewicht zu der rotierenden Trommel 1 und zu dem innerhalb dieser verlaufenden Zuführrohr für die zu vertropfende Masse darstellt, von dem ein Teil 11 seitlich aus der Trommel 1 herausragt. Durch den Teil 11 des feststehenden Zuführrohres wird in nicht näher gezeigter Weise die zu vertropfende Masse, in der Regel eine Schmelze, zugeführt und dann an der Unterseite der rotierenden Trommel 1 auf ein Transport- oder Kühlband 12 nach unten abgegeben, das in der Darstellung nach Fig. 1 durchsichtig gezeichnet ist, um die unterhalb der rotierenden Trommel 1 liegende Umlenkwalze 13 erkennen zu lassen.

Sowohl die Wippe 7 mit ihren Teilen, als auch die Umlenkwalze 13 sind an einem Traggestell 14 gelagert. Der oberste Längsbalken 15 dieses Traggestelles 14 ist auf jeder Seite mit einem Anschlag 16 versehen, der höhenverstellbar ist. Die Wippe 7 wird durch einen pneumatischen Zylinder 17 im Gegenuhrzeigersinn so beaufschlagt, dass ihre Hebelarme 5 und 6 bzw. Teile der an ihnen angebrachten Lagerung 18 auf dem Anschlag 16 zu liegen kommen. Die Höhe der rotierenden Trommel 1 oberhalb des Bandes 12 kann dadurch definiert eingestellt werden.

Da die durch das Zuführrohr 11 einzubringende Schmelze in der Regel beheizt und auf einer bestimmten Temperatur gehalten werden muss, sind in an sich bekannter Weise Zu- und Abführleitungen 19, 20 für ein Heizmedium vorgesehen, das innerhalb des Zuführrohres in bekannter Weise strömt.

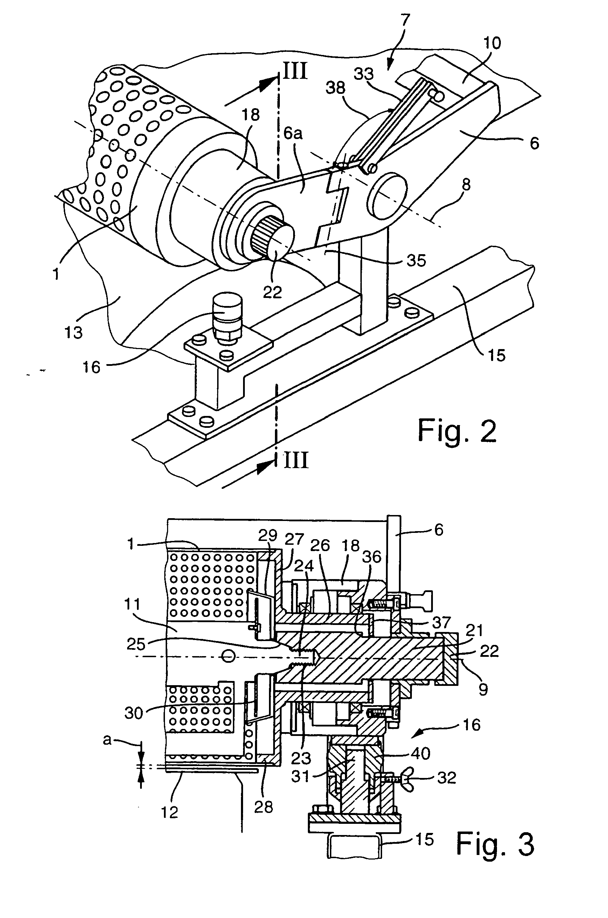

Die Fig. 2 und 3 lassen erkennen, dass das Lager 18, welches an dem Schwenkarm 6 befestigt ist, zentral um einen Verbindungszapfen 21 herum angeordnet ist, dessen Achse mit der Rotationsachse 9 der Trommel 1 zusammenfällt. Der Verbindungszapfen 21 ist drehbar angeordnet und besitzt an seinem nach außen ragenden Ende eine geriffelte Endkappe 22 oder eine entsprechende Betätigungseinrichtung und an seinem inneren Ende ein Gewinde 23, mit dem er auf einen Gewindezapfen 24 des feststehenden Innenrohres 11 aufgeschraubt ist, um das Innenrohr stabil zu lagern. Der Schraubzapfen 24 und der Verbindungszapfen 21 sind außerdem noch mit einem Führungskonus 25 versehen, der die Ausrichtung und die Verbindung von Zapfen 21 und Innenrohr 11 sichert.

Radial innerhalb des Lagers 18 ist eine Hülse 26 vorgesehen, die zentriert, aber axial verschiebbar innerhalb des Lagers 18 gehalten ist und die an ihrem linken Ende ein Lagerschild 27 mit einem axial in das Stirnende der Trommel 1 hereinragenden Kragen 28 aufweist. Am Lagerschild 27 einerseits und am Innenrohr 11 andererseits sind Abschirmschalen und -bleche vorgesehen, welche dafür sorgen, dass der Konus 25 und das Gewinde 23 möglichst gegenüber der im Inneren der Trommel 1 herrschenden Atmosphäre abgedeckt sind.

Zu erkennen ist aus Fig. 2, dass die Wippe 7 in der Stellung nach Fig. 2 vom Anschlag 16 abgehoben ist und nach einer Verschwenkung im Gegenuhrzeigersinn - die mit Hilfe des Pneumatikzylinders 17 erfolgt - gemäß Fig. 3 auf dem Anschlag 16 aufliegt, so dass auf diese Weise der Abstand a zwischen dem Trommelumfang 1 und dem Kühlband 12 fest und sicher eingestellt ist. Der Anschlag 16 ist zu diesem Zweck so ausgebildet, dass er in der Höhe verstellbar ist. Dies kann beispielsweise dadurch geschehen, dass eine Schraubhülse 30 auf einem feststehenden Schraubbolzen 31 aufgesetzt ist und die Verstellung ermöglicht, wobei der eingestellte Abstand dann durch eine Klemmschraube 32 gesichert wird.

Die Fig. 2 lässt aber auch noch einen Schwenkhebel 33 erkennen, der mit zwei parallel zueinander verlaufenden Wänden versehen ist und der während des Betriebes die Oberkante des Schwenkhebels 6 übergreift, wie das in Fig. 1 gezeigt ist. Der Schwenkhebel 6 ist zur Halterung der Lagerung 18 mit einem Hebelteil 6a versehen, der um eine Achse 35 schwenkbar ist, die in der Nähe der Schwenkachse 8 senkrecht zu dieser verläuft. Sinn und Zweck dieses aufschwenkbaren Hebelteiles 6a ist es, das Lager 18 in einfacher Weise von der Trommel 1 zu entfernen, um diese beispielsweise zu warten oder auszuwechseln. Der Schwenkhebel 33 sichert in seiner Lage nach Fig. 1 den Hebelteil 6a fluchtend zum Schwenkebel 6 ausgerichtet. Zur Entfernung des Lagers 18 von der Trommel wird der Schwenkhebel 33 in seine Lage nach Fig. 2 im Sinn des Pfeiles 38 hochgeschwenkt.

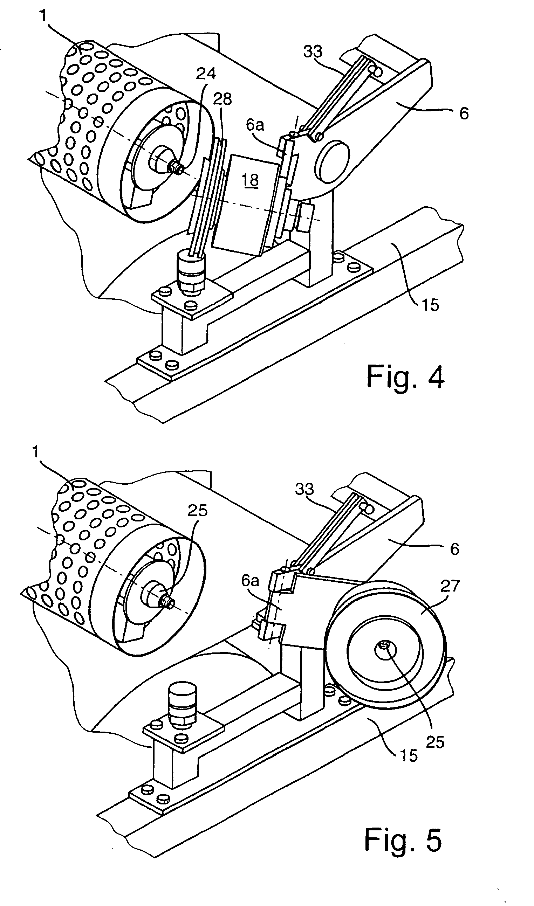

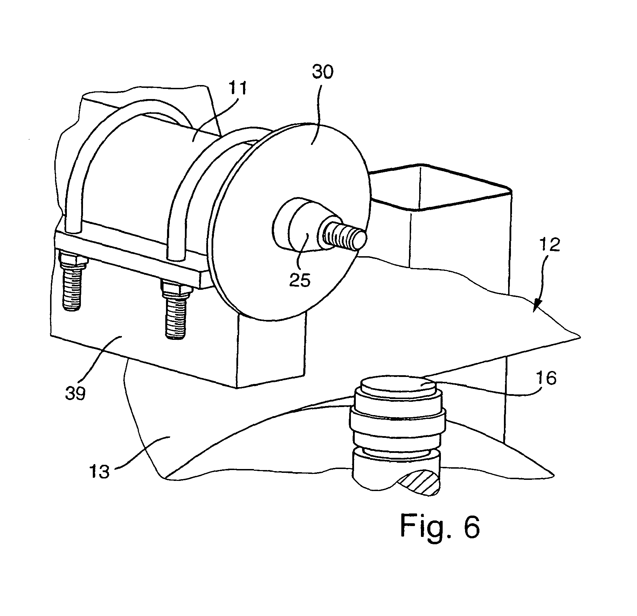

Anschließend wird - ausgehend von der Betriebsstellung nach Fig. 3 - der Verbindungszapfen 21 vom Innenrohr 11 gelöst, was durch Aufschrauben geschieht. Bei diesem Aufschraubvorgang wird der Verbindungszapfen 21 nach rechts bewegt, gibt den Konus 25 frei und nimmt dann über einen Absatz 36 die Hülse 26 mit, welche an ihrem rechten Ende mit einem Anschlagring 37 versehen ist, der in Eingriff mit dem Absatz 36 kommt. Die Hülse 26 mit dem Lagerschild 27 wird daher beim weiteren Schraubvorgang vom Verbindungszapfen 21 axial nach rechts verschoben, bis der Kragen 28 aus der Stirnseite der Trommel 1 austritt. Die Lagerschale 29 hat dann auch die Schutzscheibe 30 freigegeben, und es kann nach der Verschwenkung des Sicherungshebels 33 im Sinn des Pfeiles 38, die auch erst nach dem Lösen des Kragens 28 aus der Trommel erfolgen kann, der Teil 6a des Schwenkhebels 6, wie in Fig. 4 gezeigt, mit dem Lager 18 nach rechts abgeschwenkt werden und zwar bis in die Stellung nach Fig. 5, in der dann das axiale Abziehen der Trommel 1 von der auf der gegenüberliegenden Seite angeordneten Lagerung ohne Probleme möglich ist. Das Innenrohr 11 mit einem angesetzten Adapterstück 39 ist dann ebenfalls für Wartungsarbeiten zugängig, wie Fig. 6 zeigt.

## Patentansprüche

1. Vorrichtung zur Herstellung von Granulat mit einer gelochten rotierenden Trommel (1) mit einer Zuführeinrichtung (11) für fließfähige Massen im Innenraum, deren Austrittsöffnungen am unteren Umfang der Trommel (1)I zur Deckung mit deren Lochungen kommen, sowie mit einem unterhalb der rotierenden Trommel angeordneten Kühlband (12), auf welches die aus der gelochten Trommel in Tropfenform austretenden Massen fallen und sich verfestigen, wobei die Trommel (1) an Tragarmen (5, 6) gehalten ist, die um eine parallel zur Achse (9) der Trommel (1) verlaufende Achse (8) schwenkbar sind, **dadurch gekennzeichnet, dass** einer der Tragarme (6) einen um eine senkrecht zur Schwenkachse (8) und in deren Nähe verlaufende Achse (35) schwenkbaren Teil (6a) besitzt und dass der Teil (6a) des Schwenkarmes mit einer an einer Stirnseite der Trommel (1) angreifenden Lagerung (18) versehen ist.

2. Vorrichtung nach Anspruch 1, **dadurch gekennzeichnet, dass** die Trommel (1) durch einen an einem Traggestell (14) angeordneten Anschlag (16) positioniert ist, gegen den die Tragarme (5, 6) gedrückt sind.

3. Vorrichtung nach Anspruch 2, **dadurch gekennzeichnet, dass** der Anschlag (16) verstellbar ist.

4. Vorrichtung nach Anspruch 1, **dadurch gekennzeichnet, dass** die Tragarme (5, 6) Teil einer Wippe (7) sind, deren über die Schwenkachse (8) hinausragende Arme untereinander durch einen Querbügel (10) verbunden sind.

5. Vorrichtung nach Anspruch 4, **dadurch gekennzeichnet, dass** der Antriebsmotor (4) für die Trommel (1) am Querbügel (10) angeordnet ist.

6. Vorrichtung nach Anspruch 5, **dadurch gekennzeichnet, dass** der Antriebsmotor (4) über einen Kettentrieb (2) mit einem Antriebsrad der Trommel (1) verbunden ist.

7. Vorrichtung nach Anspruch 1, **dadurch gekennzeichnet, dass** die Lagerung (18) einen drehbaren Innenteil aufweist, welcher einen Verbindungszapfen (21) umgibt, der am Schwenkarm (6a) und an der Zuführeinrichtung (11) befestigbar ist.

8. Vorrichtung nach Anspruch 1, **dadurch gekennzeichnet, dass** die innerhalb der Lagerung (18) angeordnete Hülse (26) ein Lagerschild (27) mit einem stirnseitig in die Trommel einschiebbaren Kragen (28) aufweist.

9. Vorrichtung nach Anspruch 8, **dadurch gekennzeichnet, dass** Lagerschild (27) und Kragen (28) axial aus der Trommel (1) herausziehbar angeordnet sind.

10. Vorrichtung nach Anspruch 7, **dadurch gekennzeichnet, dass** der Verbindungszapfen (21) axial von der Zuführeinrichtung (11) abziehbar ausgebildet ist.

11. Vorrichtung nach Anspruch 10, **dadurch gekennzeichnet, dass** der Verbindungszapfen (21) auf einen Gewindezapfen (24) der Zuführeinrichtung (11) aufgeschraubt ist.

12. Vorrichtung nach Anspruch 11, **dadurch gekennzeichnet, dass** der Verbindungszapfen (21) mit einem Anschlag (36) versehen ist, der beim axialen Abziehen von der Zuführeinrichtung (11) das Lagerschild (27) mit dem Kragen (28) mitnimmt.

13. Vorrichtung nach Anspruch 12, **dadurch gekennzeichnet, dass** das Lagerschild (27) mit dem Kragen (28) über eine Axialhülse (26) im Lager (18) gehalten ist, welches am Tragarm (6) befestigt ist und dass die Axialhülse (26) mit einem mit dem Anschlag (36) des Verbindungszapfens (21) zusammenwirkenden Kragen (37) versehen ist.

## Claims

1. Device for the production of granulate using a perforated rotating drum (1) having a feed device (11) for free-flowing masses in the interior, whose outlet openings become aligned on the lower circumference of the drum (1) with its holes, and having a cooling belt (12) arranged underneath the rotating drum onto which material exiting the perforated drum falls as droplets which solidify, where the drum (1) is held by support arms (5, 6) pivotable about an axis (8) that is parallel to the axis (9) of the drum (1), **characterized in that** one of the support arms (6) incorporates a part (6a) pivotable about an axis (35) which is perpendicular to the pivot axis (8) and in its vicinity, and **in that** the part (6a) of the pivot arm is provided with a bearing (18) engaging with the front end of the drum (1).

2. Device according to Claim 1, **characterized in that** the drum (1) is positioned by a stop (16) arranged on a supporting frame (14), against which stop the support arms (5, 6) are pressed.

3. Device according to Claim 2, **characterized in that** the stop (16) is adjustable.

4. Device according to Claim 1, **characterized in that** the support arms (5, 6) are part of a rocker assembly (7) whose arms protruding beyond the pivot axis (8) are connected to one another by a cross-member (10).

5. Device according to Claim 4, **characterized in that** the drive motor (4) for the drum (1) is arranged on the cross-member (10).

6. Device according to Claim 5, **characterized in that** the drive motor (4) is connected to a drive wheel of the drum (1) by a drive chain (2).

7. Device according to Claim 1, **characterized in that** the bearing (18) comprises a rotating inner part surrounding a connecting journal (21) that can be fastened to the pivot arm (6a) and to the feed device (11).

8. Device according to Claim 1, **characterized in that** the sleeve (26) arranged inside the bearing (18) comprises a bearing shield (27) with a collar (28) that can be inserted into the front end of the drum.

9. Device according to Claim 8, **characterized in that** the bearing shield (27) and collar (28) are arranged such that they can be pulled axially out of the drum (1).

10. Device according to Claim 7, **characterized in that** the connecting journal (21) is designed such that it can be removed axially from the feed device (11).

11. Device according to Claim 10, **characterized in that** the connecting journal (21) is screwed onto a threaded pin (24) of the feed device (11).

12. Device according to Claim 11, **characterized in that** the connecting journal (21) is provided with a stop (36) that pulls the bearing shield (27) with the collar (28) with it during axial removal from the feed device (11).

13. Device according to Claim 12 **characterized in that** the bearing shield (27) with the collar (28) is held by an axial sleeve (26) inside the bearing (18) fastened to the support arm (6) and **in that** the axial sleeve (26) is provided with a collar (37) interacting with the stop (36) of the connecting journal (21).

## Revendications

1. Dispositif de production de granulés comprenant un tambour rotatif perforé (1) avec un dispositif d'alimentation (11) pour des masses coulantes à l'intérieur, dont les orifices de sortie viennent couvrir sur la circonférence inférieure du tambour (1) les perforations de ce dernier, ainsi qu'un tapis refroidissant (12) disposé au-dessous du tambour rotatif, sur lequel les masses sortant du tambour perforé sous forme de gouttes tombent et se solidifient, sachant que le tambour (1) est maintenu par des bras porteurs (5, 6) qui peuvent être pivotés autour d'un axe (8) s'étendant parallèlement à l'axe (9) du tambour (1), **caractérisé en ce qu'**un des bras porteurs (6) présente une partie (6a) pouvant être pivotée autour d'un axe (35) s'étendant perpendiculairement à l'axe de pivotement (8) et à proximité de celui-ci, et que la partie (6a) du bras pivotant est dotée d'un palier (18) s'engageant sur une face frontale du tambour (1).

2. Dispositif selon la revendication 1, **caractérisé en ce que** le tambour (1) est positionné par une butée (16) disposée sur un cadre porteur (14) et contre laquelle les bras porteurs (5, 6) sont appuyés.

3. Dispositif selon la revendication 2, **caractérisé en ce que** la butée (16) est réglable.

4. Dispositif selon la revendication 1, **caractérisé en ce que** les bras porteurs (5, 6) font partie d'une bascule (7), dont les bras dépassant de l'axe de pivotement (8) sont reliés entre eux par une barre transversale (10).

5. Dispositif selon la revendication 4, **caractérisé en ce que** le moteur d'entraînement (4) pour le tambour (1) est disposé sur la barre transversale (10).

6. Dispositif selon la revendication 5, **caractérisé en ce que** le moteur d'entraînement (4) est relié à une roue menante du tambour (1) par l'intermédiaire d'une transmission par chaîne (2).

7. Dispositif selon la revendication 1, **caractérisé en ce que** le palier (18) présente une partie interne rotative, qui entoure un tourillon de liaison (21) pouvant être fixé au bras pivotant (6a) et au dispositif d'alimentation (11).

8. Dispositif selon la revendication 1, **caractérisé en ce que** le manchon (26) disposé dans le palier (18) présente un flasque (27) avec un collet (28) pouvant être introduit dans le tambour du côté frontal.

9. Dispositif selon la revendication 8, **caractérisé en ce que** le flasque (27) et le collet (28) sont disposés de manière à pouvoir être extraits axialement du tambour (1).

10. Dispositif selon la revendication 7, **caractérisé en ce que** le tourillon de liaison (21) est conçu de manière à pouvoir être détaché axialement du dispositif d'alimentation (11).

11. Dispositif selon la revendication 10, **caractérisé en ce que** le tourillon de liaison (21) est vissé sur une goupille filetée (24) du dispositif d'alimentation (11).

12. Dispositif selon la revendication 11, **caractérisé en ce que** le tourillon de liaison (21) est pourvu d'une butée (36) qui entraîne le flasque (27) et le collet (28) lors du retrait axial du dispositif d'alimentation (11).

13. Dispositif selon la revendication 12, **caractérisé en ce que** le flasque (27) et le collet (28) sont maintenus, par l'intermédiaire d'un manchon axial (26), dans le palier (18), lequel est fixé au bras porteur (6), et que le manchon axial (26) est doté d'un collet (37) agissant en interaction avec la butée (36) du tourillon de liaison (21).
